# EUROPEAN PATENT APPLICATION

(11) **EP 4 722 300 A1**
(43) Date of publication of application: **08.04.2026**
(21) Application number: 24815255.5
(22) Date of filing: 20.05.2024
(51) Int. Cl.: C08L 83/07, C08K 3/013, C08K 5/05, C08L 83/05, C08L 83/06

(54) **THERMALLY CONDUCTIVE SILICONE COMPOSITION AND CURED PRODUCT**

(30) Priority: 31.05.2023 JP 2023089772
(71) Applicant: SHIN-ETSU CHEMICAL CO., LTD., Tokyo 100-0005 (JP)
(72) Inventor: NISHIMURA Issei, Annaka-shi, Gunma 379-0224 (JP); ENDO Akihiro, Annaka-shi, Gunma 379-0224 (JP); ITO Takanori, Annaka-shi, Gunma 379-0224 (JP)
(74) Representative: Schicker, Silvia
(86) International application number: PCT/JP2024/018422
(87) International publication number: WO 2024/247771

(57) **Abstract**

The present invention is a thermally conductive silicone composition and a cured product of thermally conductive silicone in which a hydrolyzable organopolysiloxane represented by the following general formula (1) is compounded as a component (C). As a result, a thermally conductive silicone composition and a cured product of thermally conductive silicone are provided: 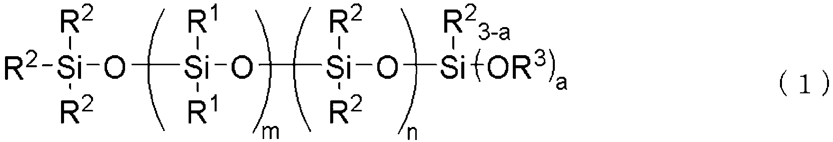 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that the range of 3 ≤ m + n ≤ 90 is satisfied; and the siloxane units enclosed in parentheses in the above general formula (1) may be bonded in either a block or random copolymer fashion.

## Description

### TECHNICAL FIELD

The present invention relates to a thermally conductive silicone composition and a cured product of thermally conductive silicone.

### BACKGROUND ART

Electronic components in highly integrated circuits such as CPUs experience a significant decrease in their performance due to heat generation during use. In order to address this problem, heat dissipating materials are used that are introduced into the air layer between the heat generating part and the cooling part, thereby enabling more efficient heat transfer. Among these, silicone heat dissipating materials are applied in a wide range of fields due to their high heat resistance, weatherability, and electrical insulation properties derived from silicone. Also, in recent years, with the trend toward miniaturization and higher integration of electronic equipment, it has become increasingly important to cool the generated heat more efficiently, which has driven the demand for heat dissipating materials with higher thermal conductivity.

In recent years, there have been more cases where heat dissipating materials are used for automotive applications in oils containing chemicals, such as automatic transmission fluid (ATF), which is a lubricating oil for engine gears. Therefore, chemical resistance of the heat dissipating materials has become increasingly important; however, general silicone (dimethyl silicone) heat dissipating materials tend to swell or deteriorate in organic solvent environments such as ATF. Furthermore, since ATF is often heated to high temperatures, the materials are required to have not only resistance to ATF but also heat resistance.

As a heat dissipating material having chemical resistance, there have been proposed heat dissipating materials using a fluoroelastomer having a perfluoropolyether structure in the main chain and being a mixture of thermally conductive fillers (Patent Documents 1 to 3). However, this fluoroelastomer has a lower thermal conductivity compared to dimethyl silicone, and when an attempt is made to increase the filling amount of the thermally conductive fillers to compensate for this, the material fails to become grease-like or the composition becomes highly viscous, thereby deteriorating workability and processability. Furthermore, these heat dissipating materials have a high specific gravity and are expensive, and therefore, development of a new heat dissipating material having chemical resistance as an alternative is desired.

Phenyl silicone has greater affinity for aromatic solvents such as benzene and toluene compared to dimethyl silicone, but has lower affinity for saturated hydrocarbons such as ATF. Also, phenyl silicone has a thermal conductivity comparable to that of dimethyl silicone. Furthermore, since phenyl silicone is less susceptible to oxidative deterioration than dimethyl silicone, it is known to have higher heat resistance (Patent Documents 4 and 5). Accordingly, by incorporating phenyl silicone in a heat dissipating material, it is possible to provide a heat dissipating material having chemical resistance as well.

However, dispersing agents (wetters) for phenyl silicone and thermally conductive fillers have not been developed, and compositions using phenyl silicone and cured products thereof have scarcely been studied.

### CITATION LIST

### PATENT LITERATURE

Patent Document 1: JP 2015-67736 A
Patent Document 2: JP 2015-67737 A
Patent Document 3: JP 2017-082090 A
Patent Document 4: JP 2007-039621 A
Patent Document 5: JP 2004-262919 A

### SUMMARY OF INVENTION

### TECHNICAL PROBLEM

An object of the present invention is to provide a thermally conductive silicone composition and a cured product of thermally conductive silicone, which are excellent in heat resistance and chemical resistance.

### SOLUTION TO PROBLEM

The present invention has been made to solve the above-described problem and provides the following thermally conductive silicone composition and cured product of thermally conductive silicone.

That is, the present invention provides a thermally conductive silicone composition comprising the following (A) to (F):
(A) a phenyl-modified organopolysiloxane having two or more alkenyl groups in one molecule and having a kinematic viscosity of 100 to 100,000 mm²/s at 25°C, in an amount of 100 parts by mass;
(B) an organohydrogen polysiloxane having two or more hydrosilyl groups, in such an amount that the number of moles of hydrosilyl groups in the component (B) is 0.1 to 3 moles based on 1 mole of alkenyl groups possessed by the component (A);
(C) a hydrolyzable organopolysiloxane represented by the following general formula (1), in an amount of 10 to 300 parts by mass, 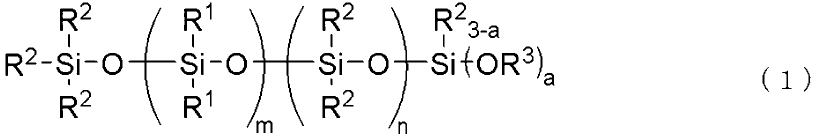 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that a range of 3 ≤ m + n ≤ 90 is satisfied; and the siloxane units enclosed in parentheses in the general formula (1) may be bonded in either a block or random copolymer fashion;
(D) one or more thermally conductive fillers selected from the group consisting of a metal, a metal oxide, a metal hydroxide, and a metal nitride, in an amount of 10 to 97% by mass based on an entire composition;
(E) a platinum group metal catalyst in an amount of 0.1 to 500 ppm based on a mass of the component (A), on a mass basis in terms of platinum group metal atoms; and
(F) a hydrosilylation reaction controlling agent: in an amount of 0.05 to 5 parts by mass.

With such a thermally conductive silicone composition, it is possible to obtain a cured product excellent in heat resistance and chemical resistance.

The above component (C) is preferably represented by the following general formula (2): 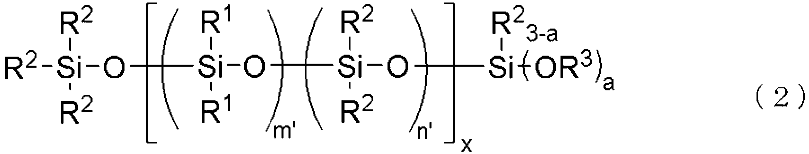 wherein R¹, R², R³, and "a" are the same as described above; "x" is an integer of 1 ≤ x ≤ 30; "m'" is an integer of 1 ≤ m' ≤ 3; "n'" is an integer of 0 ≤ n' ≤ 2, provided that m' + n' is 3; the siloxane units enclosed by the parentheses m' and n' may be bonded in either a block or random copolymer fashion; and the two types of siloxane units enclosed by the parentheses x are bonded in a block copolymer fashion.

Such a hydrolyzable organopolysiloxane has higher solubility in phenyl-modified silicone.

It is preferable that R¹ shown in the above general formula (1) is a phenyl group and R² is a methyl group.

From the viewpoint of synthesizing the hydrolyzable organopolysiloxane, it is preferable to use these groups.

It is preferable that the above thermally conductive silicone composition has an absolute viscosity of 1 to 1,000 Pa·s at 23°C.

When the above thermally conductive silicone composition has an absolute viscosity at 23°C within the above range, it is excellent in terms of workability and processability.

Then, the present invention provides a cured product of thermally conductive silicone formed by curing the above thermally conductive silicone composition.

Such a cured product of thermally conductive silicone is excellent in terms of heat resistance and chemical resistance.

In this case, the above cured product of thermally conductive silicone having a thermal conductivity of 1.0 W/m·K or more is provided.

The cured product of thermally conductive silicone having heat resistance and chemical resistance, as well as a high thermal conductivity, can be provided as a heat dissipating material in an organic solvent environment such as ATF.

### ADVANTAGEOUS EFFECTS OF INVENTION

The thermally conductive silicone composition and the cured product of thermally conductive silicone of the present invention can have a high thermal conductivity and be excellent in heat resistance and chemical resistance. In particular, the cured product of the thermally conductive silicone composition of the present invention can be used even in an organic solvent environment such as ATF.

### DESCRIPTION OF EMBODIMENTS

Hereinafter, the present invention will be described in detail, but the present invention is not limited to the description below.

The present inventors, as a result of diligent studies conducted to achieve the above object, have found that by adding a hydrolyzable organopolysiloxane having a specific structure to a thermally conductive silicone composition, it acts as a dispersing agent (wetter) for phenyl silicone and thermally conductive fillers, thereby completing a thermally conductive silicone composition and a cured product of thermally conductive silicone, which have both heat resistance and chemical resistance.

That is, the present invention is a thermally conductive silicone composition containing the following (A) to (F):
(A) a phenyl-modified organopolysiloxane having two or more alkenyl groups in one molecule and having a kinematic viscosity of 100 to 100,000 mm²/s at 25°C, in an amount of 100 parts by mass;
(B) an organohydrogen polysiloxane having two or more hydrosilyl groups, in such an amount that the number of moles of hydrosilyl groups in the component (B) is 0.1 to 3 moles based on 1 mole of alkenyl groups possessed by the component (A);
(C) a hydrolyzable organopolysiloxane represented by the following general formula (1), in an amount of 10 to 300 parts by mass, 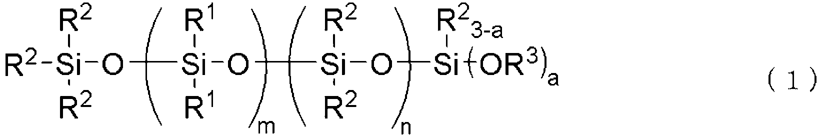 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that the range of 3 ≤ m + n ≤ 90 is satisfied; and the siloxane units enclosed in parentheses in the above general formula (1) may be bonded in either a block or random copolymer fashion;
(D) one or more thermally conductive fillers selected from the group consisting of a metal, a metal oxide, a metal hydroxide, and a metal nitride, in an amount of 10 to 97% by mass based on an entire composition;
(E) a platinum group metal catalyst in an amount of 0.1 to 500 ppm based on a mass of the component (A), on a mass basis in terms of platinum group metal atoms; and
(F) a hydrosilylation reaction controlling agent: in an amount of 0.05 to 5 parts by mass.

In particular, it is preferable that the above component (C) is a hydrolyzable organopolysiloxane represented by the following general formula (2): 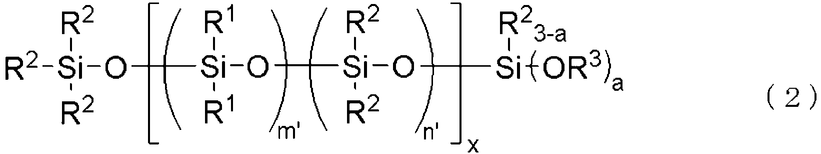 wherein R¹, R², R³, and "a" are the same as described above; "x" is an integer of 1 ≤ x ≤ 30; "m'" is an integer of 1 ≤ m' ≤ 3; "n'" is an integer of 0 ≤ n' ≤ 2, provided that m' + n' is 3; the siloxane units enclosed by the parentheses m' and n' may be bonded in either a block or random copolymer fashion; and the two types of siloxane units enclosed by the parentheses x are bonded in a block copolymer fashion.

Hereinafter, the present invention will be described in detail. It should be noted that, hereinafter, a description by numerical range endpoints includes all values included in such a range.

### [(A) Phenyl-Modified Organopolysiloxane]

The component (A) is a phenyl-modified organopolysiloxane having two or more, preferably two to ten, and more preferably two to five alkenyl groups in the molecule and having a kinematic viscosity of 100 to 100,000 mm²/s at 25°C.

The main chain is generally constituted by diorganosiloxane units, but may partially have a branched structure, or may be a cyclic organopolysiloxane; however, from the viewpoint of the physical properties of the cured product, a linear organopolysiloxane is preferable.

The alkenyl group is preferably an alkenyl group having 2 to 8 carbon atoms, and more preferably 2 to 6 carbon atoms. Examples thereof include a vinyl group, an allyl group, a propenyl group, an isopropenyl group, a butenyl group, a hexenyl group, a cyclohexenyl group, and an octenyl group. A vinyl group is particularly preferable. The alkenyl group may be bonded to a silicon atom at a molecular chain terminal, to a silicon atom in the middle of the molecular chain, or to both.

In addition, it is preferable that the phenyl-modified organopolysiloxane of the component (A) has 0.00001 to 0.01 mol/g, particularly 0.0001 to 0.01 mol/g, of alkenyl groups in one molecule.

In addition, the above component (A) is characterized by having a phenyl group. As for the amount of phenyl groups in one molecule, the number of siloxane units containing a phenyl group based on the entire siloxane units is preferably 10 to 80%, and more preferably 20 to 60%. When the amount of phenyl groups in one molecule is 10% or more based on the entire siloxane units, the miscibility with the component (C) does not significantly decrease. Also, when the amount of phenyl groups in one molecule is 80% or less based on the entire siloxane units, the viscosity of the composition does not increase more than necessary.

In addition, from the viewpoint of viscosity, it is preferable that groups other than the alkenyl group and phenyl group described above are alkyl groups having 1 to 18 carbon atoms, preferably 1 to 10 carbon atoms, and more preferably 1 to 8 carbon atoms. Examples thereof include a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group. Note that it is also possible to use those in which some of the hydrogen atoms of these alkyl groups are substituted with halogen atoms. Among the alkyl groups, a methyl group is particularly preferable.

In addition, the phenyl-modified organopolysiloxane of the component (A) is also characterized by having a kinematic viscosity of 100 to 100,000 mm²/s at 25°C. In the present invention, the kinematic viscosity is a value measured with an Ostwald viscometer in accordance with JIS Z 8803:2011. The kinematic viscosity is preferably 300 to 20,000 mm²/s, and more preferably 500 to 10,000 mm²/s. When the kinematic viscosity is less than 100 mm²/s, the phenyl modification ratio becomes too small, which is not preferable. When the kinematic viscosity is more than 100,000 mm²/s, the composition becomes difficult to handle, which is also not preferable.

The phenyl-modified organopolysiloxane may be used alone, or may be used in combination of two or more types.

Examples of such a component (A) include a dimethylsiloxane-diphenylsiloxane copolymer in which both molecular chain terminals are capped with dimethylvinylsiloxy groups, having a kinematic viscosity of 100 to 100,000 mm²/s at 25°C, such as a phenyl-modified organopolysiloxane represented by the following formula.

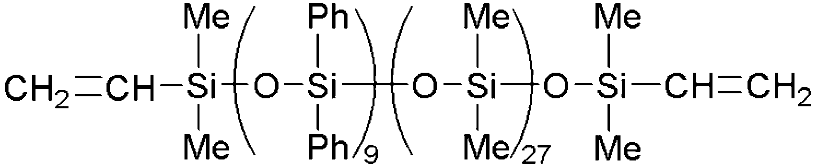

### [(B) Organohydrogen Polysiloxane]

The component (B) is an organohydrogen polysiloxane having two or more, preferably 2 to 50, more preferably 2 to 20, and still more preferably 2 to 10, hydrosilyl groups in one molecule.

The component (B) usable in the present invention is an organohydrogen polysiloxane that can undergo an addition reaction with the alkenyl group of the component (A) in the presence of the platinum group metal catalyst (E) described later to form a crosslinked structure.

The molecular structure of the organohydrogen polysiloxane is not particularly limited as long as it has the above property, and examples thereof include a linear structure, a branched structure, a cyclic structure, a linear structure partially having a branched structure or a cyclic structure. A linear structure or a cyclic structure is preferable.

The organohydrogen polysiloxane preferably has a kinematic viscosity of 1 to 1,000 mm²/s, and more preferably 10 to 100 mm²/s, at 25°C. When the kinematic viscosity is 1 mm²/s or more, there is no risk of deterioration in the physical characteristics of the silicone composition, and when it is 1,000 mm²/s or less, there is no risk that the silicone composition will have poor extensibility.

It is preferable that organic groups bonded to silicon atoms of the organohydrogen polysiloxane include monovalent aromatic hydrocarbon groups having 6 to 10 carbon atoms, and it is preferable that they do not include groups having hydrosilylation reactivity, such as alkenyl groups or alkynyl groups.

Also, as groups other than the above monovalent aromatic hydrocarbon groups, alkyl groups are preferable, and alkyl groups having 1 to 12 carbon atoms, preferably 1 to 10 carbon atoms, are preferable. Examples thereof include a methyl group, an ethyl group, a propyl group, a butyl group, a hexyl group, and a dodecyl group. Note that it is also possible to use those in which some of the hydrogen atoms of these alkyl groups are substituted by halogen atoms. Among these, a methyl group is preferable.

The organohydrogen polysiloxane may be used alone, or may be used in combination of two or more types.

Examples of such a component (B) include a methylhydrogensiloxane-diphenylsiloxane copolymer in which both molecular chain terminals are capped with trimethylsiloxy groups and a dimethylsiloxane-methylhydrogensiloxane-diphenylsiloxane copolymer in which both molecular chain terminals are capped with trimethylsiloxy groups, such as phenyl-modified organohydrogen polysiloxanes represented by the following formulae.

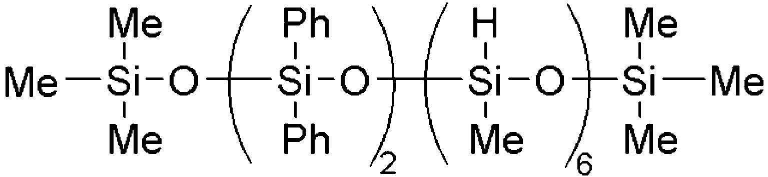

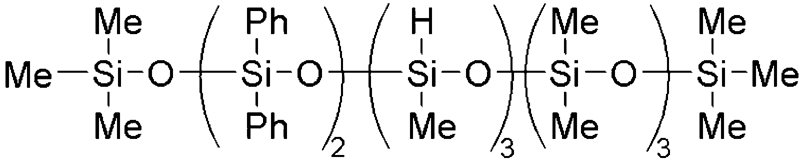

The amount of the organohydrogen polysiloxane of the component (B) compounded is such an amount that the number of hydrosilyl groups in the component (B) is 0.1 to 3, preferably 0.7 to 3, and more preferably 1 to 2, based on the total number of alkenyl groups in the component (A). When the amount of the component (B) is less than the above lower limit value, the addition reaction does not proceed sufficiently, and crosslinking is insufficient. In addition, when the amount is more than the above upper limit value, the crosslinked structure may become non-uniform, or the storage stability of the composition may deteriorate.

### [(C) Hydrolyzable Organopolysiloxane]

The component (C) is a hydrolyzable organopolysiloxane represented by the following formula (1), which acts as a dispersing agent (wetter) for phenyl silicone and thermally conductive fillers: 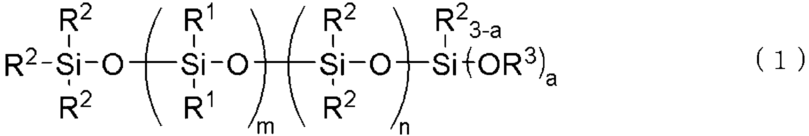 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that the range of 3 ≤ m + n ≤ 90 is satisfied; and the siloxane units enclosed in parentheses in the above general formula (1) may be bonded in either a block or random copolymer fashion.

In the above general formula (1), R¹ is independently a monovalent aromatic hydrocarbon group having 6 to 10 carbon atoms. Specific examples of R¹ include aryl groups such as a phenyl group, a tolyl group, a xylyl group, and a mesityl group, among which a phenyl group is preferable.

In the above general formula (1), R² is independently an alkyl group having 1 to 10 carbon atoms, preferably 1 to 5 carbon atoms, and more preferably 1 to 3 carbon atoms. Examples of R² include a methyl group, an ethyl group, a propyl group, an isopropyl group, a butyl group, a tert-butyl group, a pentyl group, a hexyl group, an octyl group, a nonyl group, and a decyl group, among which a methyl group is preferable.

In the above general formula (1), R³ is independently an alkyl group having 1 to 4 carbon atoms, preferably a methyl group or an ethyl group. Examples of R³ include a methyl group, an ethyl group, a propyl group, an isopropyl group, a butyl group, and a tert-butyl group. Among these, from the viewpoint of hydrolyzability of the organopolysiloxane compound of the present invention, a methyl group is particularly preferable. Also, in the above general formula (1), "a" is 2 or 3, but from the viewpoint of ease of synthesis and economic efficiency, "a" is preferably 3.

In the above general formula (1), "m" is normally an integer of 1 ≤ m ≤ 30, preferably an integer of 3 ≤ m ≤ 20, and more preferably an integer of 5 ≤ m ≤ 18. When "m" is more than 30, the viscosity of the organopolysiloxane increases significantly, which is thus not preferable. Also, in the above general formula (1), "n" is normally an integer of 0 ≤ n ≤ 60, preferably an integer of 5 ≤ n ≤ 50, and more preferably an integer of 10 ≤ n ≤ 40. When "n" is outside the above range, the miscibility with phenyl-modified silicone decreases, which is thus not preferable. In addition, m + n is 3 ≤ m + n ≤ 90, and is preferably 6 ≤ m + n ≤ 60. Outside the above range, the handleability of the composition becomes poor, which is thus not preferable.

It is preferable that the component (C) of the present invention is a hydrolyzable organopolysiloxane having a block structure represented by the following general formula (2): 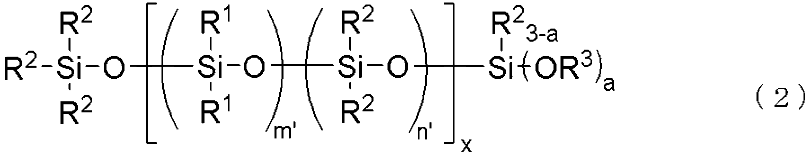 wherein R¹, R², R³, and "a" are the same as described above; "x" is an integer of 1 ≤ x ≤ 30; "m'" is an integer of 1 ≤ m' ≤ 3; "n'" is an integer of 0 ≤ n' ≤ 2, provided that m' + n' is 3; the siloxane units enclosed by the parentheses m' and n' may be bonded in either a block or random copolymer fashion; and the two types of siloxane units enclosed by the parentheses x are bonded in a block copolymer fashion.

Examples of such a component (C) include a hydrolyzable organopolysiloxane, such as a dimethylsiloxane-diphenylsiloxane copolymer in which one molecular chain terminal is capped with a trimethoxysiloxy group represented by the following formula.

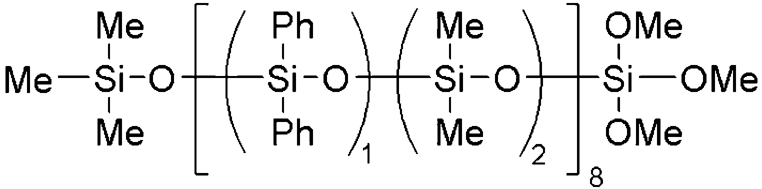

The amount of the component (C) compounded is 10 to 300 parts by mass, preferably 15 to 200 parts by mass, and more preferably 20 to 100 parts by mass, based on 100 parts by mass of the component (A). When the amount of the component (C) is less than 10 parts by mass, it is difficult to increase the filling amount of thermally conductive fillers in the cured product of thermally conductive silicone, which is thus not preferable. In addition, when the amount is more than 300 parts by mass, the viscosity of the thermally conductive silicone composition increases significantly, which is thus not preferable.

### [(D) Thermally Conductive Fillers]

The component (D) is one or more thermally conductive fillers selected from the group consisting of a metal oxide, a metal hydroxide, and a metal nitride. Examples thereof include alumina, zinc oxide, magnesium oxide, aluminum oxide, silicon dioxide, cerium oxide, iron oxide, aluminum hydroxide, cerium hydroxide, aluminum nitride, and boron nitride. These may be used alone or in combination of two or more types as appropriate, and it is preferable that the combination includes particles having different average particle diameters, that is, a large particle component and a small particle component. Any two or more types of particles having different average particle diameters can be combined, preferably a combination of two, three, or four types of particles having different average particle diameters. By combining particles having different average particle diameters, the viscosity, processability, uniformity, and other properties of the resulting composition can be suitably adjusted. Hereinafter, in the case where the component (D) is a combination of particles having different average particle diameters, the portion constituted by components having an average particle diameter of less than 10 µm is referred to as the small particle component, and the portion constituted by components having an average particle diameter larger than the average particle diameter of any of the small particle components is referred to as the large particle component.

When the average particle diameter of the large particle component is 0.1 µm or more, the viscosity of the resulting composition does not become high, and the processability does not decrease either. In addition, when the average particle diameter is 100 µm or less, the resulting composition does not become non-uniform and there is no risk of oil bleeding, and therefore, the average particle diameter is preferably in the range of 0.1 to 100 µm, and more preferably in the range of 10 to 75 µm.

Also, when the average particle diameter of the small particle component (smaller than the average particle diameter of the large particle component) is 0.01 µm or more, the viscosity of the resulting composition does not become high, and the processability does not decrease either. On the other hand, when the average particle diameter is 10 µm or less, the resulting composition does not become non-uniform, and therefore, the average particle diameter may be in the range of 0.01 µm or more and less than 10 µm, preferably in the range of 0.1 to 4 µm.

The proportions of the large particle component and the small particle component are not particularly limited; and, in the case where the large particle component is defined as having an average particle diameter of 10 µm or more (preferably 10 µm or more and 75 µm or less) and the small particle component as having an average particle diameter of less than 10 µm (preferably 0.01 µm or more and less than 10 µm), the ratio between the large particle component and the small particle component is preferably in the range of 9:1 to 1:9 (mass ratio). In addition, the shapes of the large particle component and the small particle component are not particularly limited, and may be spherical, irregular, needle-like, or the like. The large particle component is preferably spherical, while the small particle component is preferably spherical or irregularly shaped. Even when the small particle component is irregularly shaped, it can fill the voids between the large particles.

It should be noted that the average particle diameter can be determined as, for example, the volume-based average value (or median diameter) in a particle size distribution measurement by a laser diffraction method, and can be determined using a commercially available laser diffraction particle size distribution measuring apparatus, such as the particle diameter distribution measuring apparatus MT3000II (manufactured by MicrotracBEL Corp.).

The amount of the component (D) compounded is 10 to 97% by mass, preferably 20 to 95% by mass, more preferably 30 to 95% by mass, and still more preferably 50 to 95% by mass, based on the entire composition. When the amount is larger than 97% by mass, the viscosity of the composition increases, resulting in decreased processability. Also, when the amount is smaller than 10% by mass, the thermal conductivity becomes poor.

### [(E) Platinum Group Metal Catalyst]

The component (E) is a platinum group metal catalyst and functions to promote the addition reaction between the component (A) and component (B) described above. As the platinum group metal catalyst, any conventionally known catalysts used for the addition reaction may be used. Examples thereof include catalysts based on platinum, palladium, and rhodium, among which platinum or platinum compounds, which are relatively readily available, are preferable. For example, simple substance of platinum, platinum black, chloroplatinic acid, platinum-olefin complexes, platinum-alcohol complexes, and platinum coordination compounds may be mentioned. The platinum group metal catalyst may be used alone or in combination of two or more types.

The amount of the component (E) compounded is 0.1 to 500 ppm, preferably 1 to 200 ppm, on a mass basis in terms of platinum group metal atoms based on the mass of the component (A). When the amount of the catalyst is smaller than the above lower limit value, the catalytic effect may not be obtained. Also, even when the amount is larger than the above upper limit value, the catalytic effect does not increase, and it is economically disadvantageous, which is thus not preferable.

### [(F) Hydrosilylation Reaction Controlling Agent]

The component (F) is a reaction controlling agent that suppresses the progress of the hydrosilylation reaction at room temperature, and is added to extend the shelf life and pot life. As the reaction controlling agent, any conventionally known controlling agents used in addition-curable silicone compositions may be used. Examples thereof include acetylenic compounds such as acetylenic alcohols (for example, 3-methyl-1-tridecyn-3-ol, 1-ethynyl-1-cyclohexanol, and 3,5-dimethyl-1-hexyn-3-ol), various nitrogen compounds such as tributylamine, tetramethylethylenediamine, and benzotriazole, organic phosphorus compounds such as triphenylphosphine, oxime compounds, and organic chloro compounds.

The amount of the component (F) compounded is 0.05 to 5 parts by mass, and preferably 0.1 to 1 part by mass. When the amount of the reaction controlling agent is less than 0.05 parts by mass, a desired sufficient shelf life and pot life may not be obtained, and when the amount is larger than 5 parts by mass, the curability of the silicone composition may decrease.

### Manufacturing Process of Thermally Conductive Silicone Composition

A method for manufacturing the thermally conductive silicone composition in the present invention will be described. The method for manufacturing the thermally conductive silicone composition in the present invention is not particularly limited.

Examples thereof include a method in which the above-described components (A) to (F) are mixed using, for example, a mixer or the like, such as a rotation/revolution mixer (trade name: Awatori Neritaro, manufactured by Thinky Corporation), Trimix, Twin Mix, or Planetary Mixer (all manufactured by Inoue Mfg., Inc.), Ultra Mixer (manufactured by Mizuho Industrial Co., Ltd.), or Hivis Disper Mix (manufactured by Tokushu Kika Kogyo Co., Ltd.). Also, all components to be compounded may be compounded at once, or one component or multiple components may be mixed in several stages.

In the present invention, it is preferable to first mix the components (A), (C), and (D) at room temperature, and then mix the components (E), (B), and (F) .

The phenyl silicone composition of the present invention preferably has a viscosity measured at 23°C of 1 to 1,000 Pa·s, more preferably 20 to 700 Pa·s, and still more preferably 50 to 500 Pa·s. When the viscosity is 1 Pa·s or more, there is no risk of poor workability such as difficulty in maintaining shape. Also, when the viscosity is 1,000 Pa·s or less, there is no risk of decreased processability. The above viscosity can be obtained by adjusting the amounts of the above-described components compounded. It should be noted that, in the present invention, the absolute viscosity is a value measured using a viscosity/viscoelasticity measuring apparatus. As the measuring apparatus, for example, MARS40 manufactured by Thermo Fisher Scientific can be used, and the absolute viscosity can be determined by performing measurement under the measurement conditions of using parallel plates at 23°C with a gap of 0.5 mm and a rotational speed of 10 s⁻¹.

### Manufacturing Process of Cured Product of Thermally Conductive Silicone

The thermally conductive silicone composition of the present invention can be made into a cured product by heating normally at 50 to 180°C, preferably at 80 to 150°C, and more preferably at 100 to 120°C.

By using the thermally conductive silicone composition of the present invention and molding it by a desired method, a cured product with any shape can be obtained. The molding method is not particularly limited; and, for example, the thermally conductive silicone composition prepared in the above manufacturing process of composition can be poured into a mold, and after sandwiching the mold opening with two fluorine-treated PET films, curing can be performed at 110°C for 10 minutes using a press molding machine, thereby obtaining a cured product of thermally conductive silicone.

### Thermal Conductivity of Cured Product of Thermally Conductive Silicone

The cured product of thermally conductive silicone in the present invention may have a thermal conductivity of 1.0 W/m·K or more, preferably 2.0 W/m·K or more. The thermal conductivity is preferably as high as possible, and therefore, it is not possible to determine the upper limit value; and, for example, it can be 20 W/m·K or less. It should be noted that, in the present invention, the thermal conductivity is a value measured by the hot disk method in accordance with ISO 22007-2. This value can be measured by, for example, using a hot disk thermophysical property measuring apparatus of the TPS series (such as TPS 2500S) manufactured by Kyoto Electronics Manufacturing Co., Ltd.

### EXAMPLE

Hereinafter, the present invention will be specifically described with reference to Examples and Comparative Examples, but the present invention is not limited to them.

### Preparation of Thermally Conductive Silicone Composition

The components (A) to (F) used in the following Examples are shown below. Note that Me represents a methyl group and Ph represents a phenyl group. It should be noted that, in the following formulae, the siloxane units enclosed in round brackets may be bonded in either a block or random copolymer fashion. The siloxane units enclosed in square brackets are bonded in a block copolymer fashion. The kinematic viscosity is a value at 25°C measured using an Ostwald viscometer as described in JIS Z 8803:2011.

### Component (A)

A-1: Phenyl-modified organopolysiloxane represented by the following formula and having a kinematic viscosity of 700 mm²·s⁻¹ 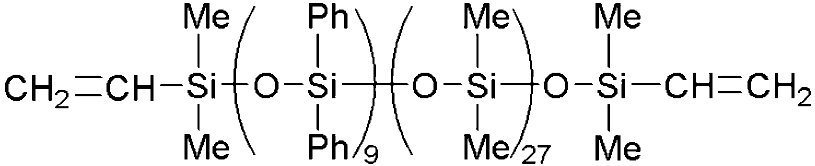
A-2: Organopolysiloxane represented by the following formula and having a kinematic viscosity of 600 mm²·s⁻¹

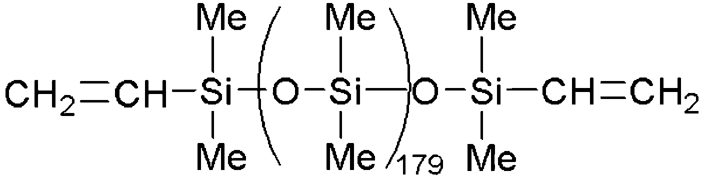

### Component (B)

B-1: Phenyl-modified organohydrogen polysiloxane represented by the following formula and having a kinematic viscosity of 20 mm²·s⁻¹ 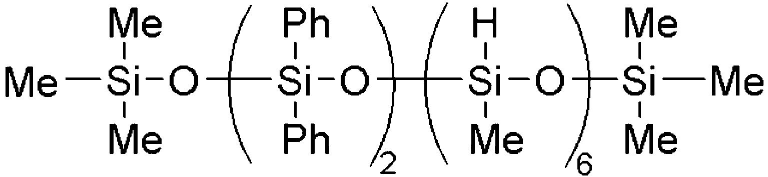
B-2: Phenyl-modified organohydrogen polysiloxane represented by the following formula and having a kinematic viscosity of 19 mm²·s⁻¹ 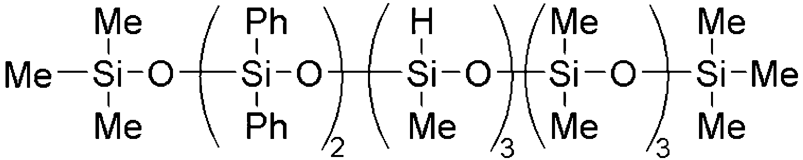
B-3: Organohydrogen polysiloxane represented by the following formula and having a kinematic viscosity of 5 mm² · s⁻¹

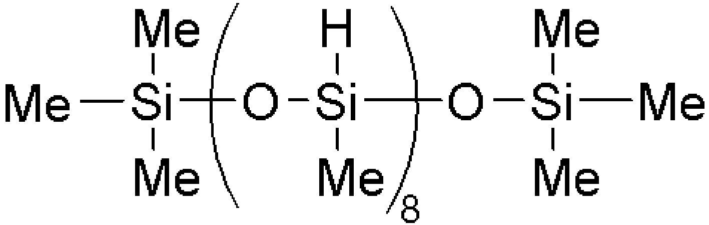

### Component (C)

C-1: Hydrolyzable organosiloxane represented by the following formula 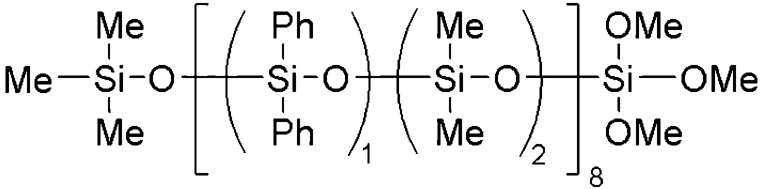
C-2: Hydrolyzable organosiloxane represented by the following formula 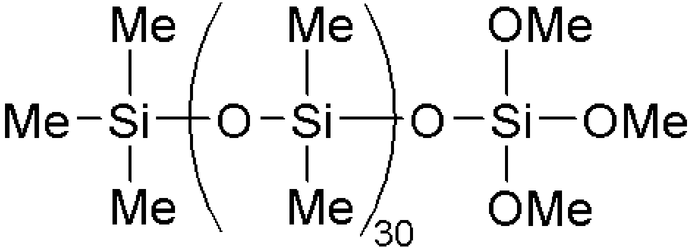
C-3: Decyltrimethoxysilane represented by the following formula 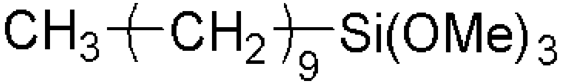
C-4: Phenyltrimethoxysilane represented by the following formula

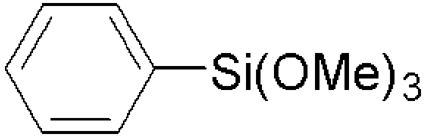

### Component (D)

The filler particle diameter (the average particle diameter) of the component (D) was measured by a particle diameter distribution measuring apparatus, MT3000II (manufactured by MicrotracBEL Corp.).
D-1: Spherical alumina powder (median diameter: 70 µm)
D-2: Spherical alumina powder (median diameter: 45 µm)
D-3: Spherical alumina powder (median diameter: 10 µm)
D-4: Irregularly shaped alumina powder (median diameter: 2 µm)

### Component (E)

### 5% solution of chloroplatinic acid in 2-ethylhexanol

### Component (F)

### 3-Methyl-1-tridecyn-3-ol

### [Manufacturing Method]

The components (A), (C), and (D) were mixed as follows to obtain the compositions of the Examples and Comparative Examples. In a rotation/revolution mixer (trade name: Awatori Neritaro, manufactured by Thinky Corporation), a plastic container in which the components (A), (C), and (D) had been weighed according to the compositional ratios (parts by mass) shown in Table 1 and Table 2 was placed, and mixing was performed at room temperature at 2,000 rpm for 1 minute × 2 times, followed by cooling of the obtained mixture to room temperature. Thereafter, the component (E) was added, and mixing was performed at 2,000 rpm for 30 seconds × 2 times, followed by cooling of the obtained mixture to room temperature. Furthermore, a mixture of the component (B) and the component (F) was added, and mixing was performed at 2,000 rpm for 10 seconds × 2 times, followed by cooling to room temperature, and then deaeration treatment was carried out using a vacuum pump.

### [Molding Method]

The prepared thermally conductive silicone composition was poured into a mold of 60 mm × 60 mm × 6 mm or 190 mm × 140 mm × 2 mm, and after sandwiching the mold opening with two fluorine-treated PET films, curing was performed at 110°C for 10 minutes using a press molding machine to obtain a cured product of thermally conductive silicone.

### [Evaluation Methods]

### [Viscosity]

The obtained composition was measured for viscosity using a viscosity/viscoelasticity measuring apparatus (trade name: MARS40 (Thermo Fisher Scientific)) at a rotational speed of 10 s-1. The measurement conditions were at 23°C, using parallel plates with a gap of 0.5 mm.

### [Thermal Conductivity]

Using two sheets with a thickness of 6 mm, molded in the Examples 1 to 3 and Comparative Examples 1 to 4 below, the thermal conductivity of the cured products was measured with a thermal conductivity meter (TPS 2500S, manufactured by Kyoto Electronics Manufacturing Co., Ltd.) (the hot disk method in accordance with ISO 22007-2).

### [Hardness]

The hardness of the cured products of thermally conductive silicone was measured using a durometer (Type A) hardness tester as defined in JIS K 6253-3:2012. For those with a measured value of less than 20, the hardness was measured using a durometer (Asker C) hardness tester in accordance with the method described in Annex 2 of JIS K 7312:1996.

### [Heat Resistance Test]

The 6-mm-thick sheet was aged at 180°C. After 90 hours of aging, the sheet was returned to room temperature, and measurement of the hardness before and after aging was carried out.

### [Chemical Resistance Test]

The 2-mm-thick sheet of 40 × 40 mm was immersed in TOYOTA genuine ATF fluid, and aging was conducted at 150°C. After 250 hours of aging, the sheet was removed from the ATF fluid, and the rate of change in volume was calculated from changes in mass and density before and after aging.

The evaluation results are shown in Tables 1 and 2.

**[Table 1]**

| | Component name | | Example 1 | Comparative Example 1 | Comparative Example 2 | Comparative Example 3 | Conparative Example 4 |
|---|---|---|---|---|---|---|---|
| Compositional features | Component (A) (g) | A-1 | 100 | 100 | 100 | 100 | |
| | | A-2 | | | | | 100 |
| | Component (B) (g) | B-1 | 8.6 | 8.6 | 8.6 | 8.6 | |
| | | B-3 | | | | | 1.0 |
| | Component (C) (g) | C-1 | 22.8 | | | | |
| | | C-2 | | 22.8 | | | 22.8 |
| | | C-3 | | | 22.8 | | |
| | | C-4 | | | | 22.8 | |
| | Component (D) (g) | D-2 | 490.5 | 490.5 | 490.5 | 490.5 | 462.4 |
| | | D-3 | 245.3 | 245.3 | 245.3 | 245.3 | 231.2 |
| | | D-4 | 245.3 | 245.3 | 245.3 | 245.3 | 231.2 |
| | Component (E) (g) | E-1 | 0.89 | 0.89 | 0.89 | 0.89 | 0.89 |
| | Component (F) (g) | F-1 | 0.44 | 0.44 | 0.44 | 0.44 | 0.44 |
| Filler filling ratio (wt.%) | | | 88.1 | 88.1 | 88.1 | 88.1 | 88.1 |
| H/Vi | | | 1 | 1 | 1 | 1 | 1 |
| Composition viscosity (Pa·s) | | | 100 | 60 | 40 | 300 | 45 |
| Thermal conductivity (W/m·K) | | | 2.0 | - | 2.0 | 2.0 | 2.0 |
| Hardness (Type A) | | | 40 | - | 19 | 43 | 18 |
| Hardness after heat resistance test (Type A) | | | 56 | - | 93 | 95 | 27 |
| Rate of change in volume after ATF resistance test (%) | | | -4.2 | - | -4.6 | -4.5 | 2.6 |

**[Table 2]**

| | Component name | | Example 2 | Example 3 |
|---|---|---|---|---|
| Compositional features | Component (A) (g) | A-1 | 100 | 100 |
| | Component (B) (g) | B-1 | 8.6 | |
| | | B-2 | | 15.1 |
| | Component (C) (g) | C-1 | 100 | 100 |
| | Component (D) (g) | D-1 | 622 | 642 |
| | | D-2 | 622 | 642 |
| | | D-3 | 622 | 642 |
| | | D-4 | 899 | 927 |
| | Component (E) (g) | E-1 | 1.02 | 1.02 |
| | Component (F) (g) | F-1 | 0.24 | 0.24 |
| Filler filling ratio (wt.%) | | | 92.9 | 92.9 |
| H/Vi | | | 1 | 1 |
| Composition viscosity (Pa·s) | | | 500 | 500 |
| Thermal conductivity (W/m·K) | | | 4.5 | 4.5 |
| Hardness (Asker C) | | | 60 | 30 |
| Hardness after heat resistance test (Type A) | | | 74 | 40 |
| Rate of change in volume after ATF resistance test (%) | | | -2.3 | -2.3 |

The cured product of thermally conductive silicone in which a phenyl-modified hydrolyzable organosiloxane corresponding to the above general formula (1) was used as the component (C) employed in Examples 1 to 3 had a thermal conductivity of 2.0 W/m·K or more, and showed almost no change in hardness in the heat resistance test at 180°C. In addition, in Examples 2 and 3, although the thermally conductive filler was highly filled, since the component (C) of the present invention was contained, the increase in the viscosity of the composition and the hardness of the cured product was suppressed, thereby achieving a high thermal conductivity.

In contrast, as in Comparative Example 1, in the case where a hydrolyzable dimethyl organosiloxane (C-2) was used as the component (C), it was found that a cured product was not obtained stably. This is considered to be because the miscibility between the phenyl-modified organopolysiloxane of the component (A) and the dimethyl organosiloxane (C-2) is low, causing (C-2) to be separated in the composition.

Also, as in Comparative Examples 2 and 3, in the case where decyltrimethoxysilane (C-3) or phenyltrimethoxysilane (C-4) was used as the component (C), the hardness after the heat resistance test increased significantly. This is considered to be because (C-3) and (C-4) are small molecules, and have high volatility.

Furthermore, the cured product using the phenyl-modified silicone composition exhibited a volume change of about -4% after the ATF resistance test for 250 hours, as in Example 1. This is different from the result for the dimethyl silicone elastomer cured product as in Comparative Example 4, which swelled by 2.6% under the same conditions. In addition, since the volume change of the cured product using the phenyl-modified silicone composition after the ATF resistance test shows little difference depending on the component (C), it is considered to be a property specific to the phenyl-modified silicone composition.

From the above results, the cured product of thermally conductive silicone according to the present invention exhibits relatively high ATF resistance, and also has a thermal conductivity of 4.0 W/m·K or more. Accordingly, the thermally conductive silicone composition and the cured product of thermally conductive silicone of the present invention can serve as new heat dissipating materials having chemical resistance.

The present description includes the following embodiments.
[1]: A thermally conductive silicone composition comprising the following (A) to (F) :
   (A) a phenyl-modified organopolysiloxane having two or more alkenyl groups in one molecule and having a kinematic viscosity of 100 to 100,000 mm²/s at 25°C, in an amount of 100 parts by mass;
   (B) an organohydrogen polysiloxane having two or more hydrosilyl groups, in such an amount that the number of moles of hydrosilyl groups in the component (B) is 0.1 to 3 moles based on 1 mole of alkenyl groups possessed by the component (A);
   (C) a hydrolyzable organopolysiloxane represented by the following general formula (1), in an amount of 10 to 300 parts by mass, 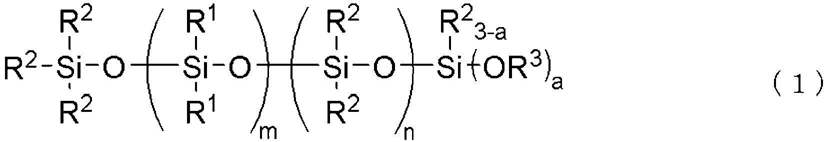 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that a range of 3 ≤ m + n ≤ 90 is satisfied; and the siloxane units enclosed in parentheses in the above general formula (1) may be bonded in either a block or random copolymer fashion;
   (D) one or more thermally conductive fillers selected from the group consisting of a metal, a metal oxide, a metal hydroxide, and a metal nitride, in an amount of 10 to 97% by mass based on an entire composition;
   (E) a platinum group metal catalyst in an amount of 0.1 to 500 ppm based on a mass of the component (A), on a mass basis in terms of platinum group metal atoms; and
   (F) a hydrosilylation reaction controlling agent: in an amount of 0.05 to 5 parts by mass.
[2]: The thermally conductive silicone composition according to [1], wherein the component (C) is represented by the following general formula (2): 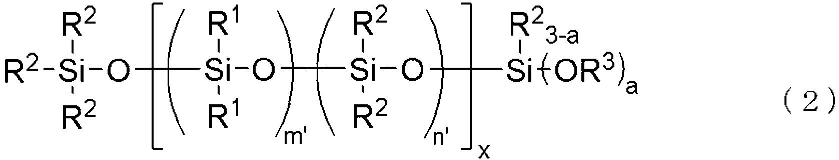 wherein R¹, R², R³, and "a" are the same as described above; "x" is an integer of 1 ≤ x ≤ 30; "m'" is an integer of 1 ≤ m' ≤ 3; "n'" is an integer of 0 ≤ n' ≤ 2, provided that m' + n' is 3; the siloxane units enclosed by the parentheses m' and n' may be bonded in either a block or random copolymer fashion; and the two types of siloxane units enclosed by the parentheses x are bonded in a block copolymer fashion.
[3]: The thermally conductive silicone composition according to [1] or [2] wherein R¹ is a phenyl group and R² is a methyl group in the general formula (1).
[4]: The thermally conductive silicone composition according to any one of [1] to [3], having an absolute viscosity of 1 to 1,000 Pa·s at 23°C.
[5]: A cured product of thermally conductive silicone formed by curing the thermally conductive silicone composition according to any one of [1] to [4].
[6]: The cured product of thermally conductive silicone according to [5], having a thermal conductivity of 1.0 W/m·K or more.

Note that the present invention is not limited to the embodiments described above. The embodiments described above are merely illustrations, and any embodiments having substantially the same configuration as and providing similar effects to the technical concept described in the claims of the present invention are encompassed in the technical scope of the present invention.

## Claims

1. A thermally conductive silicone composition comprising the following (A) to (F) :
(A) a phenyl-modified organopolysiloxane having two or more alkenyl groups in one molecule and having a kinematic viscosity of 100 to 100,000 mm²/s at 25°C, in an amount of 100 parts by mass;
(B) an organohydrogen polysiloxane having two or more hydrosilyl groups, in such an amount that the number of moles of hydrosilyl groups in the component (B) is 0.1 to 3 moles based on 1 mole of alkenyl groups possessed by the component (A);
(C) a hydrolyzable organopolysiloxane represented by the following general formula (1), in an amount of 10 to 300 parts by mass, 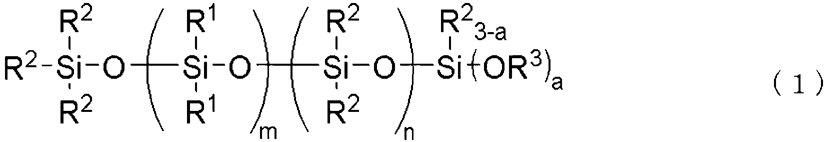 wherein R¹ is independently a monovalent aromatic hydrocarbon group having 6 to 10 carbon atoms; R² is independently an alkyl group having 1 to 10 carbon atoms; R³ is an alkyl group having 1 to 4 carbon atoms; "a" is 2 or 3; "m" is an integer of 1 ≤ m ≤ 30; "n" is an integer of 0 ≤ n ≤ 60, provided that a range of 3 ≤ m + n ≤ 90 is satisfied; and the siloxane units enclosed in parentheses in the above general formula (1) may be bonded in either a block or random copolymer fashion;
(D) one or more thermally conductive fillers selected from the group consisting of a metal, a metal oxide, a metal hydroxide, and a metal nitride, in an amount of 10 to 97% by mass based on an entire composition;
(E) a platinum group metal catalyst in an amount of 0.1 to 500 ppm based on a mass of the component (A), on a mass basis in terms of platinum group metal atoms; and
(F) a hydrosilylation reaction controlling agent: in an amount of 0.05 to 5 parts by mass.

2. The thermally conductive silicone composition according to claim 1, wherein the component (C) is represented by the following general formula (2): 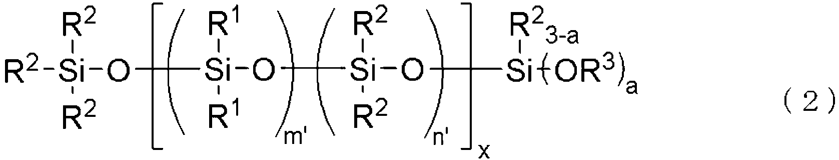 wherein R¹, R², R³, and "a" are the same as described above; "x" is an integer of 1 ≤ x ≤ 30; "m'" is an integer of 1 ≤ m' ≤ 3; "n'" is an integer of 0 ≤ n' ≤ 2, provided that m' + n' is 3; the siloxane units enclosed by the parentheses m' and n' may be bonded in either a block or random copolymer fashion; and the two types of siloxane units enclosed by the parentheses x are bonded in a block copolymer fashion.

3. The thermally conductive silicone composition according to claim 1, wherein R¹ is a phenyl group and R² is a methyl group in the general formula (1).

4. The thermally conductive silicone composition according to claim 1, having an absolute viscosity of 1 to 1,000 Pa·s at 23°C.

5. A cured product of thermally conductive silicone formed by curing the thermally conductive silicone composition according to any one of claims 1 to 4.

6. The cured product of thermally conductive silicone according to claim 5, having a thermal conductivity of 1.0 W/m·K or more.
